# EUROPEAN PATENT SPECIFICATION

(11) **EP 2 021 999 B1**
(45) Date of publication and mention of the grant of the patent: **11.12.2013**
(21) Application number: 07797886.4
(22) Date of filing: 30.05.2007
(51) Int. Cl.: G06Q 30/02, H04W 4/02

(54) **LOCATION-SPECIFIC DELIVERY OF PROMOTIONAL CONTENT TO MOBILE CONSUMER DEVICE**
ORTSSPEZIFISCHE LIEFERUNG VON WERBEINHALT AN EINE MOBILE VERBRAUCHERVORRICHTUNG
ENVOI SPÉCIFIQUE EN FONCTION DE L'EMPLACEMENT DE CONTENU PROMOTIONNEL À UN CONSOMMATEUR MOBILE

(30) Priority: 30.05.2006 US 809659 P; 13.06.2006 US 804588 P; 29.05.2007 US 754815
(43) Date of publication of application: 11.02.2009
(73) Proprietor: Dell Products, L.P., Round Rock, TX 78682 (US)
(72) Inventor: BUCHER, Timothy, Los Altos, CA 94024 (US); MCKENDRICK, Ain, Mountain View, CA 94041 (US); ROSS, Mark, Andrew, San Carlos, CA 94070 (US)
(74) Representative: Hess, Peter K. G.
(86) International application number: PCT/US2007/069992
(87) International publication number: WO 2007/140418

(56) References cited:
- DE-A1- 10 256 766
- US-B1- 6 332 127

## Description

### 1. The Field of the Invention

The present invention generally relates to wireless communication devices. In particular, the present invention relates to methods for wirelessly delivering targeted information to a wireless mobile consumer according to device location.

### 2. The Relevant Technology

As wireless consumer communication technology implemented in mobile consumer devices such as satellite receivers, personal digital assistants, cell phones, etc., gain popularity across a broad spectrum of users, an ever-increasing range of applications are being devised for implementation with such devices. However, to date little has been done to customize content for wireless delivery to mobile consumer devices based upon the location of the device.

For instance, a merchant may provide an 802.11 network for use by customers on or near the merchant's premises, but further wireless interaction between the merchant and the customer is typically absent. Also, potential customers of the merchant may pass by in range of the merchant's 802.11 network, or even utilize the hotspot, without the merchant being able to target and wirelessly communicate with such potential customers to entice them to patronize the merchant's products and/or services.

More generally, a potential customer in possession of and using a mobile electronic device capable of wireless communication may be considered by the merchant as ideally positioned to patronize the merchant's products or services by virtue of the customer's particular current location. However, few resources exist by which the merchant can effectively contact the potential customer in the hopes of attracting a new patron.

As seen by the above discussion, therefore, a need exists in the art for a means by which a content provider can provide targeted content according to the location of a mobile electronic device capable of receiving such content.

The US 6 332 127 B1 discloses systems, methods and computer program products for selecting an advertising object to be displayed within a Web page requested by a user based on the geographic location of the user and/or the time of day. The EP 1 321 880 A2 discloses a method of providing an advertisement for a store to a prospective customer comprising the steps of: compiling the advertisement, formatting the advertisement into a radio signal having a radio transmission protocol that is receivable by a personal device of a prospective customer, the personal device having a radio receiver enabled to receive the transmission protocol signal, and transmitting the radio signal from the store.

The US 2002/0138345 A1 discloses a method for providing personalized coupons to a customer at the beginning of the customer's shopping process comprising the steps: obtaining a current shopping list from a wireless communication device of the customer, correlating the current shopping list with an available coupon list to identify personalized coupons for the customer; and providing the personalized coupons to the customer at the beginning of the customer's shopping process.

The document DE 102 56 766 A1 refers to a personalization method for a customer in a self-service shop in which the customer is identified using first means, e.g. a mobile phone, and is assigned a unique customer number. Second means are then used to store customer data such as preferences and interests in a first database via a communication network. By comparison of the customer personalized database with a special offer database goods and or special offers can be made available to the customer.

### BRIEF SUMMARY OF THE INVENTION

These and other limitations are overcome by embodiments of the present invention, which is defined in claim 1 and which includes a device that can display content received from a content provider while in a wireless communications network associated with the content provider. The device comprises a connection for receiving content over the network and a display and/or other user interface means for presenting the content to a user of the device.

According to one embodiment of the invention, a content provider, such as a merchant, detects and monitors devices within a range of the wireless communications network associated with the content provider. When a device is within range of the wireless communications network, the device is detected and authenticated for the reception of content. The authentication of the device can include determining the suitability of the software and/or operating system of the device for receiving the content, as well as determining the amount of time the mobile electronic device has been within range of the wireless communications network. After the device is authenticated, content can be transmitted to the mobile electronic device.

In some embodiments of the invention, the content can comprise promotional content, an extreme weather warning, a missing child alert, or a traffic/road condition report. Examples of promotional content include electronic coupons. An electronic coupon transmitted to a mobile electronic device and presented to a user of the device can be redeemed in a number of ways. Methods of redemption include presenting the mobile electronic device to the merchant issuing the electronic coupon, scanning a bar code included as part of the electronic coupon, infrared transfer, audio communication, and presenting a printed version of the electronic coupon to the merchant.

These and other advantages and features of the present invention will become more fully apparent from the following description and appended claims, or may be learned by the practice of the invention as set forth hereinafter.

### BRIEF DESCRIPTION OF THE DRAWINGS

To further clarify the above and other advantages and features of the present invention, a more particular description of the invention will be rendered by reference to specific embodiments thereof that are illustrated in the appended drawings. It is appreciated that these drawings depict only typical embodiments of the invention and are therefore not to be considered limiting of its scope. The invention will be described and explained with additional specificity and detail through the use of the accompanying drawings in which:
Figure 1 depicts a network environment and a simplified block diagram of an example device that can be utilized in connection with embodiments of the present invention;
Figure 2 depicts a simplified block diagram of one example operating environment wherein embodiments of the present invention can be practiced;
Figure 3 depicts a flow chart illustrating various stages of a method for providing targeted, location-specific content to a mobile electronic device according to one embodiment; and
Figure 4 depicts perspective views of one example of a mobile electronic device that can be used with embodiments of the invention.

### DETAILED DESCRIPTION OF THE PREFERRED EMBODIMENTS

Reference will now be made to figures wherein like structures will be provided with like reference designations. It is understood that the drawings are diagrammatic and schematic representations of exemplary embodiments of the invention, and are not limiting of the present invention nor are they necessarily drawn to scale.

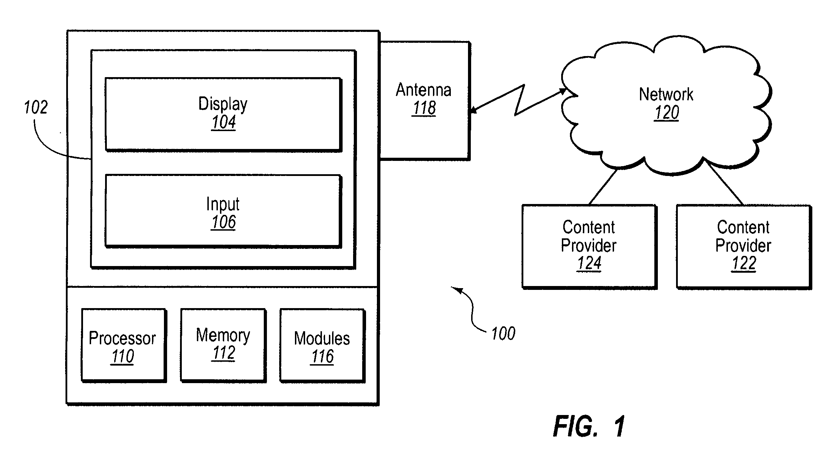

Figures 1-4 depict various features of embodiments of the present invention, which is generally directed to a method by which a content provider can provide targeted promotional content according to the location of a device capable of receiving such content. In particular, embodiments of the present invention provide for a mobile electronic device that can receive targeted content according to its location, and a content provider capable of detecting and authenticating the device when the device is within the transmission range of the provider, then transmitting the targeted content to the mobile device. Further, embodiments of the present invention can make use of past buying habits to target new customers and selectively alter the promotional content for returning customers, thus satisfying a merchant's goal to increase overall revenue.

Though described herein in connection with a mobile electronic device in the form of a wireless-enabled personal music device, one of skill in the art, with the benefit of the present disclosure, will appreciate that embodiments of the invention can be practiced in conjunction with other devices that may include, but are not limited to, personal digital assistants, cellular telephones, personal audio devices, satellite radios, and the like or any combination thereof Accordingly, the following discussion should not be construed to limit the present invention in any way.

Embodiments of the invention provide for a mobile electronic device that serves as a platform for the receipt and transmission of digital content. As used herein, "content" includes digital or analog audio/video/text data in various formats, images in various formats, data transmitted via satellite, cellular networks, the Internet and World Wide Web, and the like or any combination thereof

One embodiment of the present invention includes a mobile electronic device implemented as an 802.11-enabled personal audio/video device that can receive content over a wireless network, one example of which is a "WiFi" network. Alternately or additionally, the device may be a Bluetooth-enabled device configured to receive content over a personal area network. In general however, the device may receive content over any wireless network capable of transmitting digital information. The content can be delivered by various content providers. Embodiments of the invention can also dock with another device such as a computer for various reasons, e.g., altering stored content, and perform in a similar manner over the computer's connection.

In particular, Figure 1 illustrates one embodiment of a mobile electronic device ("device") 100 that can be utilized in connection with one embodiment of the present invention. The device 100 includes a user interface 102 that includes a display 104 and an input mechanism 106. The input mechanism 106 may include, but is not limited to, a click wheel, buttons, soft keys, and the like or any combination thereof. By operating the user interface 102, a user can navigate content stored on the device, configure device settings, select channels, select specific networks, and the like.

The device 100 is preferably a network connectable device. The device, for example, may include the ability to wirelessly access multiple types of networks, including 802.11-related wireless networks (e.g., "WiFi") and others using an antenna 118. Alternately or additionally, the device 100 may have access to other wireless networks such as Bluetooth networks, cellular networks, satellite networks, and/or terrestrial RF networks, including WiMAX, AM, FM, DAB ("digital audio broadcasting"), etc.

In one embodiment, the device 100 accesses the Internet through a wireless access point (e.g., a WiFi "hotspot") included as a portion of a network 120. Once connected to the Internet, the device 100 may interact with multiple content providers, represented by the content providers 122 and 124. In one embodiment, the device 100 may access satellite broadcast content over the Internet rather than over a satellite network. The device 100 may also be able to access terrestrial radio broadcasts (digital radio, FM, AM, and the like), as described above. Further, the device 100 can also receive and provide other media content, such as World Wide Web content, television content, video content and the like or any combination thereof, in one embodiment. Moreover the device 100 can be configured with music or other data recording capabilities, and interaction with other similarly configured devices for purposes of file swapping/sharing, instant messaging, etc.

As such, the network 120 represents, in one example, a wireless access point, the Internet, a local or wide area network, a satellite network, an RF network, a personal area network (e.g., for Bluetooth) and the like or any combination thereof.

In greater detail, one embodiment of the device 100 includes a wireless network-enabled personal music device that can access media content through the Internet using the network 120 implemented as a WiFi network hotspot or other suitable wireless access point associated with an 802.11 or other wireless network. A user of the device 100 can access media content whenever the device 100 is within range of the wireless network or whenever access to another suitable network is present.

The device 100 further includes a processor 110, memory 112 and various modules 116. The modules 116 represent the software or computer executable instructions that, when executed, cause the device to access networks, download content, manage content, provide and control the user interface including the display 104, record media content, and the like or any combination thereof. The memory 112 may store media content from the user's library on another device or may store a library of media content that has been recorded or purchased over the wireless connection or that has been shared with the device 100 from another user.

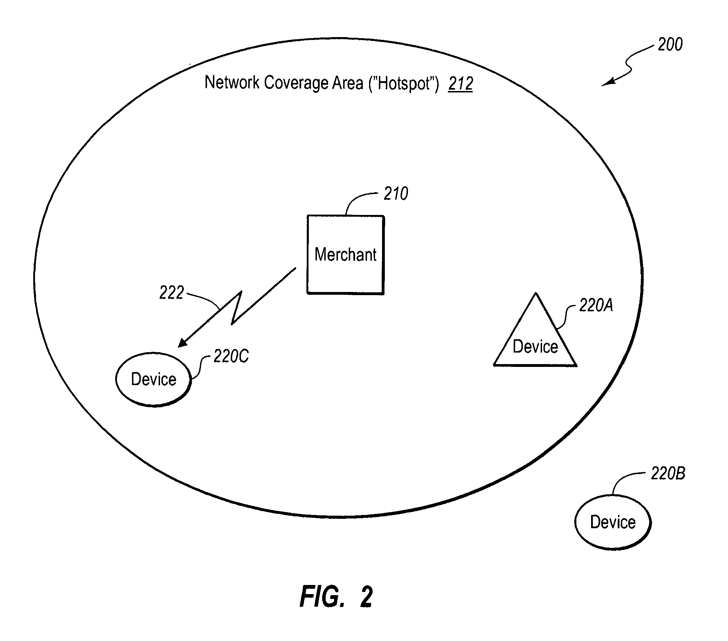

Reference is now made to Figure 2, which depicts various details regarding an example operating environment, generally designated at 200, in which embodiments of the present invention can be practiced. In one particular embodiment, the environment 200 can be utilized to enable a merchant 210 to transmit promotional content to a mobile electronic device that is proximately located with respect to a wireless access point of the merchant. This enables the merchant to target potential customers, who are users of such proximate devices, for receipt of the promotional content, in the hopes of enticing the potential customer to patronize the locale of the merchant, thereby increasing merchant traffic and transaction activity.

In particular, the environment 200 includes an 802.11 network coverage area, or "hotspot," 212 that is located in the vicinity of the merchant 210 providing the hotspot. While Figure 2 will be discussed in the context of an 802.11 network coverage area, one skilled in the art will appreciate that the environment 200 can include other types of network coverage areas instead of or in addition to the 802.11 network coverage area. For instance, the environment 200 can include a Bluetooth network, which may be used for proximity detection, content delivery, and/or coupon redemption. Additionally, in some embodiments a combination of coverage areas can be implemented. For example, a GPS network can be used for proximity detection while a cellular network is used for content delivery and a Bluetooth network is used for coupon redemption. Any number and type of networks can be used in any combination suitable for a particular application.

Returning to Figure 2, the merchant 210 represents a place of business, such as a restaurant, Internet café, bookstore, or any other suitable location. In other embodiments, the merchant is representative of other types of locations, both private and public, including museums, government licensing law enforcement locations, military installations, and so forth. The merchant 210 or other location may correspond to the content providers 122, 124 of Figure 1.

The size of the hotspot 212 in Figure 2 indicates the coverage area or range in which wireless communication can be sent from the merchant 210 to a wireless device, such as the device 100 detailed above. So configured, it is appreciated that one or more wireless devices may be found both outside of and within range of the hotspot 212 at any given time. Further, the environment 200 can be configured such that some or all wireless devices that are capable of receiving WiFi-provided content within the hotspot 212 are eligible for receiving promotional content. The hotspot 212 can be part of, or separate from, the network 120 shown in Figure 1.

The above-described variety of devices is represented in Figure 2. In particular, a first device 220A is shown within range of the hotspot 212 but comprising a device to which the merchant desires not to send promotional content. As such, no promotional content is sent by the merchant to the device 220A via the wireless network represented by the hotspot 212.

A second device 220B is also shown in Figure 2, which is of the type that the merchant desires to send promotional content to. However, the device 220B is outside the range of the hotspot 212. Accordingly, no promotional content is able to be transmitted to the device 220B.

A third device 220C is shown in Figure 2. Assuming the merchant 210 wishes to communicate with devices of the type of device 220C and that the desired area for the distribution of promotional content is the extent of the range of the hotspot 212, the device 220C is both the desired device type for promotional content reception and within range for receipt of such content. As such, the merchant 210 both desires and has the ability to send promotional content, indicated at 222, to the device 220C, which is performed as described below. The device 220C and other devices in the range of the hotspot 212 are detected and monitored by the merchant 210 through any suitable means, and so the merchant is configured to include all necessary computer components, both hardware, and software, to enable such device monitoring and communication.

Note that, while it employs a particular wireless network configuration, i.e., a WiFi network configuration, in other embodiments the merchant can employ other network configurations to transmit promotional content to desired devices. These alternative network configurations include, for example, cellular and satellite networks, to name a few. In the case of cellular or satellite networks, the range over which devices can be contacted for the receipt of promotional content can be larger than what is currently available via WiFi networks. When such a network is used to communicate the promotional material, an alternative means of identifying location is employed. For example, GPS technology can be utilized in one embodiment to determine the particular location of the device when determining whether to send the promotional material.

Moreover, while they are described as consumer devices, the devices 220 can, in other embodiments be considered commercial, governmental, military, or other devices, having varying purposes or functionality. Similarly, the content transmitted to the devices according to their respective locations can be types other than content of a promotional nature. For instance, extreme weather warnings, missing child alerts, traffic or road condition reports, or other location-dependent notices can be transmitted to devices according to their proximity to a particular area or event.

In another embodiment, it is appreciated that device-specific material can be transmitted to certain devices according to their particular configuration. For example, the network components of the merchant can be configured such that devices having a particular purpose, e.g., cell phones, can receive promotional content of one type, while other devices, e.g., personal music devices, can receive another type of promotional content. Further, the nature of the promotional material can be altered according to the time of day, the number of patrons already present at the locale, whether the user of the device receiving the promotional content is a first-time user, etc.

In the case of a merchant, as shown in Figure 2, the promotional content is in the form of a coupon that the user of the device 220C receiving the content can redeem at the locale of the merchant 210. As the coupon is transmitted to the device 220C while the user is in close proximity to the merchant 210, the user may be more likely to redeem the coupon, thereby enhancing convenience to the user.

The coupon in the present embodiment is transmitted from the merchant 210 to the device 220C via the WiFi network. This is not meant to limit the present invention to only such a configuration. Indeed, other modes of content transmission are also possible, including infrared or other RF frequency or optical transmission. The content, upon receipt by the device 220C, can be manifested to the user in various ways, including an audio alert via a speaker or headphone jack of the device, visual presentation on the display 104 (Figure 1) or a combination of these two or other modes.

In one embodiment, the coupon can be shown on the device display 104 for the user to consider. For instance, the coupon may be displayed in a ticker, as an image, or as a short message service ("SMS") message on the display 104. Should the user decide to redeem the coupon and patronize the merchant 210, the user can bring the device 220C to the merchant's point of sale. In this case, the device display 104 can be consulted to ensure the presence of the coupon. The coupon as displayed on the device display 104 can include a barcode that can be scanned to redeem its value for the purchase or transaction. The merchant can then take note that the user associated with the particular device 220C has redeemed the coupon and that the device is not allowed to redeem that coupon again for a predetermined period of time or never depending on whether the coupon type is one-time or recurring. This can be accomplished in one embodiment by noting the MAC address or other identifying information of the device 220C, or by limiting redemption of the coupon to a time period during which the device 220C is within the hotspot 212, after which the coupon becomes unredeemable. Other suitable measures can also be taken to control coupon redemption, including an automatically expiring time period. Other redemption means include IR transfer of the coupon, WiFi transfer, printing of the coupon, audio transfer via tones, etc.

In one embodiment, the merchant 210 can discriminate between current customers and potential customers by identifying the devices used by users that come into range of the hotspot 212, such as by identification and comparison of device MAC addresses with those stored by the merchant. This concept is depicted in Figure 2 by the device 220A, to which no promotional content is delivered, and device 220C that receives the promotional content. Such a system helps to prevent abuse of the merchant by patrons, remembering that one goal for the merchant is to increase merchant profit. This is done by ensuring that patrons consume more of a product, either by bringing new patrons or by encouraging existing patrons to consume more of the good or service.

In another embodiment of the invention, recipients of the promotional content can forward the promotional content to other mobile devices as a way to entice other mobile device users to patronize the merchant's locale. For instance, although the device 220B is beyond the network coverage area 212, the user of device 220B may be encouraged to come to the merchant's locale if he knows the user of device 220C is at the locale and if he can receive a discount on a purchase at the locale. Alternately or additionally, the merchant may be unable to detect the device 220A. In this case and in others, it can be advantageous to additionally allow recipients of promotional content to forward the content to other mobile devices such as the device 220A within the network coverage area 212. Hence, embodiments of the invention contemplate permitting recipients of promotional content to forward the content to other mobiles devices within or without the network coverage area 212.

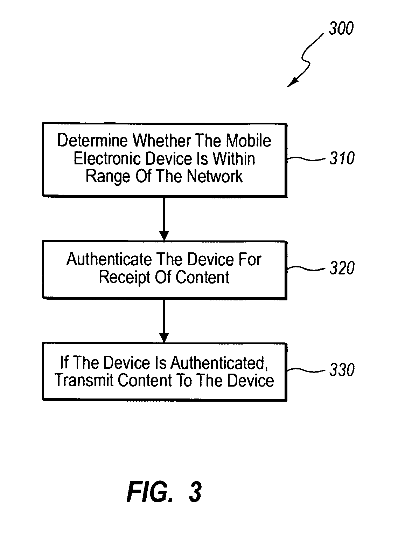

Together with Figure 2, reference is now made to Figure 3, which shows various stages of a method, generally depicted at 300, to transmit promotional content to a wireless device, such as the mobile electronic device 220C, in accordance with one embodiment. In stage 310 it is determined by the merchant 210 whether a suitable mobile device is detected within the wireless transmission range of a predetermined location. In the current example, the predetermined location is the locale of the merchant 210, and the wireless transmission range corresponds to the extent of the hotspot 212. Again, a device may be out of range, such as the device 220B, or may be within range but not be a desired device to which content is to be delivered, such as the device 220A.

In stage 320, it is determined whether the suitable mobile device identified in stage 310 is authenticated for the receipt of promotional content. Various factors may cause the authentication to fail, including lack of suitable software or operating system, device incompatibility, known current customer or device that has already redeemed a previously transmitted coupon, etc. For instance, if it is determined that the software or operating system on the mobile device is unable to present the promotional content, the authentication would fail. Suitable software or operating systems may have the ability to present the content in any of a number of ways, including by displaying the promotional content in a ticker, as an image, as an SMS message, and the like or any combination thereof.

In stage 320, if the suitable mobile device has been authenticated, the promotional content is transmitted from the merchant 210 to the device, such as the device 220C. The content can then be handled by the device 220C as described above. As before, restrictions may be placed on the content, such as a time limit for redemption of a coupon, how many times the coupon can be redeemed, etc.

In one embodiment, various algorithms to determine the authentication of the mobile electronic device can be employed to take into account whether the patron is a repeat buyer, and to correlate the patron's presence in the wireless network with the patron's typical buying habit. For example, the coupon transmitted by the merchant could have a time delay of 15 to 30 minutes from the time that the mobile electronic device enters the range of the wireless network and/or is detected near the merchant. This is predicated on the belief that the patron will enter the merchant's locale and buy one unit of the product, and that by offering a coupon after some predetermined period of time, the patron might be enticed to purchase and consume more of the product. This embodiment reflects the goal of the present promotional system to increase profits for the merchant. In particular, coupons by their very nature reduce the per-item profit. However, to the extent that they encourage an increase in consumption, the profit must be judged against the incremental cost to provide the good or service. Thus, such promotional content may indeed provide a worthwhile incentive for the merchant to engage in the transmission of coupons and the like, thereby potentially increasing profit.

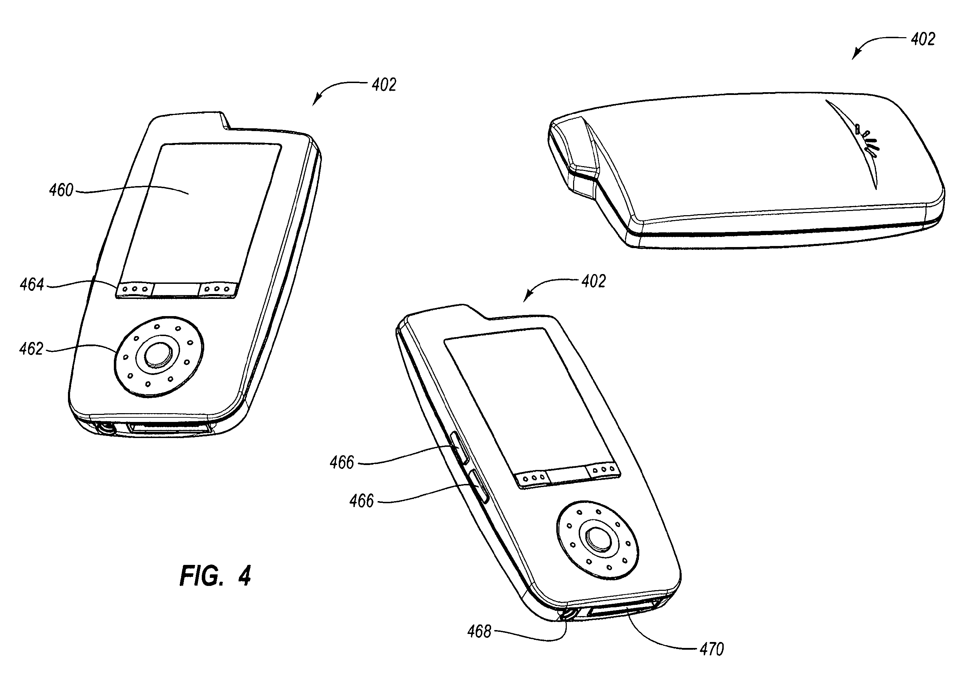

Figure 4 illustrates various perspective views of one embodiment of a mobile electronic device 402 with display and navigation mechanisms that can be used in conjunction with the features of the present invention. The device 402 may correspond to the device 100 of Figure 1. In this example, device 402 is a hand-held device, although larger devices can also be used. The device 402 includes a display 460 having various display methods. A user can interact with device 402 using a touchpad 462, electromechanical keys on a keypad, such as arrow keys and alphanumeric keys, soft keys 464 on display 460, a navigation wheel, other device buttons 466, a remote control device (not shown) associated with the device 402, voice commands, or by moving the communication device in a particular way. The device 402 may also include port 468 for connecting audio headgear and port 470 for connecting the device 402 to a docking station or connector for charging the device. Of course, device 402 can include any of a variety of configurations and designs that are contemplated within the scope of the present invention.

The above description relating to the provision of promotional content based on the location of a mobile consumer or other device and the customization of the content based on activities of the device user is meant to be illustrative of the principles of the present invention, and it is appreciated that various modifications may be made to the embodiments while still remaining in accordance with the principles of the present invention.

Generally, those skilled in the art will appreciate that various of the foregoing features of the invention may be practiced alone or in network environments with many types of computer system configurations, including media players, satellite radio receivers, FM transmitters or receivers, DAB transmitters or receivers, personal computers, hand-held devices, multi-processor systems, microprocessor-based or programmable consumer electronics, network PCs, minicomputers, mainframe computers, and the like. Aspects of the invention may also be practiced in distributed computing environments where tasks are performed by local and remote processing devices that are linked (either by hardwired links, wireless links, or by a combination of hardwired and wireless links) through a communications network. In a distributed computing environment, program modules may be located in both local and remote memory storage devices.

Embodiments of the device 100 may include computer-readable media for carrying or having computer-executable instructions or data structures stored thereon. Such computer-readable media can be any available media that can be accessed by a portable device or general purpose or special purpose computer. By way of example, and not limitation, such computer-readable media can comprise RAM, ROM, EEPROM, CD-ROM or other optical disk storage, magnetic disk storage or other magnetic storage devices, or any other medium which can be used to carry or store desired program code means in the form of computer-executable instructions or data structures and which can be accessed by a portable device or general purpose or special purpose computer. When information is transferred or provided over a network or another communications connection (either hardwired, wireless, or a combination of hardwired or wireless) to a computer, the computer properly views the connection as a computer-readable medium. Thus, any such connection is properly termed a computer-readable medium. Combinations of the above should also be included within the scope of computer-readable media. Computer-executable instructions comprise, for example, instructions and data which cause a general purpose computer, special purpose computer, or special purpose processing device to perform a certain function or group of functions.

Although not required, the invention may be described in the general context of computer-executable instructions, such as program modules, being executed by computers in network environments. Generally, program modules include acts, routines, programs, objects, components, data structures, etc. that perform particular tasks or implement particular abstract data types. Computer-executable instructions, associated data structures, and program modules represent examples of the program code means for executing acts of the methods disclosed herein. The particular sequence of such executable instructions or associated data structures represents examples of corresponding acts for implementing the functions described in such acts.

The device may also include a magnetic hard disk drive for reading from and writing to a magnetic hard disk, a magnetic disk drive for reading from or writing to a removable magnetic disk, or an optical disk drive for reading from or writing to a removable optical disk such as a CD-ROM or other optical media. The device may also include non-volatile memory including flash memory. The drives and their associated computer-readable media provide nonvolatile storage of computer-executable instructions, data structures, program modules and other data. Although the exemplary environment described herein may employ a magnetic hard disk, a removable magnetic disk and/or a removable optical disk, other types of computer readable media for storing data can be used, including magnetic cassettes, flash memory cards, digital versatile disks, Bernoulli cartridges, RAMs, ROMs, and the like.

Program code means comprising one or more program modules may be stored on the hard disk, magnetic disk, optical disk, ROM or RAM, including an operating system, one or more application programs, other program modules, and program data. A user may enter commands and information through a keyboard, pointing device, or other input devices (not shown), such as a microphone, joy stick, touch pad, game pad, satellite dish, scanner, or the like. These and other input devices are often connected to the processing unit through a universal serial bus (USB) or serial port interface coupled to system bus. Alternatively, the input devices may be connected by other interfaces, such as a parallel port, or a game port. A display device is also connected to system bus via an interface, such as video adapter.

The described embodiments are to be considered in all respects only as illustrative, not restrictive. The scope of the invention is, therefore, indicated by the appended claims rather than by the foregoing description.

## Claims

1. A method for transmitting content to one or more mobile electronic devices in a wireless communications network according to their one or more respective locations, the method comprising:
detecting (310) a mobile electronic device near a predetermined location by an access point of the wireless communications network, wherein the predetermined area comprises a coverage range of the access point of the wireless communications network, and wherein detecting further includes identifying a MAC address of the mobile electronic device by the access point of the wireless communications network;
authenticating (320) the mobile electronic device for the receipt of content, wherein authenticating the mobile electronic device includes determining the suitability of software or an operating system of the mobile electronic device for receiving the content;
comparing the MAC address of the mobile electronic device to stored MAC addresses, and authenticating the mobile electronic device based on whether the MAC address of the mobile electronic device is a stored MAC address; and
transmitting (330) the content to the authenticated mobile electronic device by a content provider via the access point.

2. The method as defined in claim 1, wherein authenticating (320) the mobile electronic device includes determining one or more of:
the suitability of software or an operating system of the mobile electronic device for receiving the content, wherein the suitability of the software or operating system is based on the ability of the software or operating system to display the content to a user of the mobile electronic device using one or more or: a ticker, an image, a short message service; and
the amount of time the mobile electronic device has been within
range of the wireless communications network.

3. The method as defined in claim 1, wherein the content comprises promotional content.

4. The method as defined in claim 3, wherein the promotional content is an electronic coupon that is displayed on a display portion of the mobile electronic device.

5. The method as defined in claim 4, wherein a user of the mobile electronic device forwards the electronic coupon to a second mobile electronic device.

6. The method as defined in claim 4, further comprising receiving the electronic coupon from the user of the mobile electronic device and providing a discount to the user on a purchase at the merchant's locale.

7. The method as defined in claim 6, wherein receiving the electronic coupon comprises one or more of: viewing the display of the mobile electronic device; scanning a barcode included in the electronic coupon; receiving an infrared communication from the mobile electronic device; receiving a printed version of the electronic coupon; and receiving an audio communication from the mobile electronic device.

8. The method as defined in claim 6, further comprising recording that the electronic coupon from the mobile electronic device has been redeemed.

9. The method as defined in claim 8, further comprising preventing the electronic coupon from the mobile electronic device from being redeemed a second time.

10. The method as defined in claim 1, further comprising detecting a second mobile electronic device near the predetermined location.

11. The method as defined in claim 10, further comprising not authenticating the second mobile electronic device, and in response to not authenticating the second mobile electronic device, not transmitting the content to the second mobile electronic device.

12. The method as defined in claim 1, further comprising waiting a specified period of time prior to transmitting (330) the content to the mobile electronic device after detecting (310) that the mobile electronic device is near the predetermined location.

13. The method as defined in claim 3, wherein a user of the mobile electronic device forwards the promotional content to a second mobile electronic device.

14. A computer program comprising instructions for implementing any of the methods according to claims 1 - 13.

## Patentansprüche

1. Ein Verfahren zum Übertragen von Inhalten zu einer mobilen elektronischen Vorrichtung oder zu mehren mobilen elektronischen Vorrichtungen in einem drahtlosen Kommunikationsnetzwerk entsprechend dessen Standort bzw. entsprechend deren Standorten, wobei das Verfahren aufweist:
Detektieren (310) einer mobilen elektronischen Vorrichtung nahe eines vorgegebenen Ortes für den Empfang durch einen Access-Point des drahtlosen Kommunikationsnetzwerkes, wobei das vorgegebene Gebiet einen Abdeckungsbereich des Access-Points des drahtlosen Kommunikationsnetzwerkes umfasst, und wobei das Detektieren weiterhin ein Identifizieren einer MAC-Adresse der mobilen elektronischen Vorrichtung durch den Access-Point des drahtlosen Kommunikationsnetzwerks umfasst;
Authentifizieren (320) der mobilen elektronischen Vorrichtung für den Empfang von Inhalten, wobei das Authentifizieren der mobilen elektronischen Vorrichtung ein Bestimmen der Eignung von Software oder von einem Betriebssystem der mobilen elektronischen Vorrichtung zum Empfangen der Inhalte umfasst;
Vergleichen der MAC-Adresse der mobilen elektronischen Vorrichtung mit einer gespeicherten MAC-Adresse und Authentifizieren der mobilen elektronischen Vorrichtung basierend darauf, ob die MAC-Adresse der mobilen elektronischen Vorrichtung eine gespeicherte MAC-Adresse ist; und
Übertragen (330) der Inhalte über den Access-Point an die authentifizierte mobile elektronische Vorrichtung durch einen Content-Provider.

2. Das Verfahren gemäß Anspruch 1, wobei das Authentifizieren (320) der mobilen elektronischen Vorrichtung ein Bestimmen eines Aspekts oder mehrerer Aspekte umfasst aus der Gruppe bestehend aus:
die Eignung der Software oder eines Betriebssystems der mobilen elektronischen Vorrichtung zum Empfangen der Inhalte, wobei die Eignung der Software oder des Betriebssystems von der Fähigkeit der Software oder des Betriebssystems abhängt, die Inhalte einem Benutzer der mobilen elektronischen Vorrichtung unter Verwendung eines Tickers und/oder eines Bilds und/oder eines Kurznachrichtendienstes anzuzeigen; und
der Zeitspanne, welche sich die mobile elektronische Vorrichtung innerhalb des Bereichs des drahtlosen Kommunikationsnetzwerkes aufgehalten hat.

3. Das Verfahren gemäß Anspruch 1, wobei die Inhalte Werbeinhalte aufweisen.

4. Das Verfahren gemäß Anspruch 3, wobei die Werbeinhalte einen elektronischen Coupon umfassen, welcher auf einem Teil eines Bildschirms der mobilen elektronischen Vorrichtung angezeigt wird.

5. Das Verfahren gemäß Anspruch 4, wobei ein Benutzer der mobilen elektronischen Vorrichtung den elektronischen Coupon an eine zweite mobile elektronische Vorrichtung weiterleitet.

6. Das Verfahren gemäß Anspruch 4, weiterhin aufweisend ein Empfangen des elektronischen Coupons von dem Benutzer der mobilen elektronischen Vorrichtung und Bereitstellen eines Rabatts für den Benutzer, auf einen Einkauf in dem Laden des Händlers.

7. Das Verfahren gemäß Anspruch 6, wobei das Empfangen des elektronischen Coupons einen oder mehrere der nachfolgenden Schritte aufweist:
ein Betrachten des Bildschirms der mobilen elektronischen Vorrichtung;
ein Scannen eines Strichcodes, welcher in dem elektronischen Coupon enthalten ist;
ein Empfangen einer Infrarot-Nachricht von der mobilen elektronischen Vorrichtung;
ein Empfangen einer gedruckten Version des elektronischen Coupons; und
ein Empfangen einer Audio-Nachricht von der mobilen elektronischen Vorrichtung.

8. Das Verfahren gemäß Anspruch 6, weiterhin aufweisend ein Aufzeichnen, dass der elektronische Coupon von der mobilen elektronischen Vorrichtung eingelöst worden ist.

9. Das Verfahren gemäß Anspruch 8, weiterhin aufweisend ein Verhindern, dass der elektronische Coupon von der mobilen elektronischen Vorrichtung ein zweites Mal eingelöst wird.

10. Das Verfahren gemäß Anspruch 1, weiterhin aufweisend ein Detektieren einer zweiten mobilen elektronischen Vorrichtung nahe des vorgegebenen Ortes.

11. Das Verfahren gemäß Anspruch 10, weiterhin aufweisend ein Nicht-Authentifizieren der zweiten mobilen elektronischen Vorrichtung, wobei in Antwort auf ein Nicht-Authentifizieren der zweiten mobilen elektronischen Vorrichtung die Inhalte nicht zu der zweiten mobilen elektronischen Vorrichtung übertragen werden.

12. Das Verfahren gemäß Anspruch 1 weiterhin aufweisend ein Abwarten einer vorgegebenen Zeitspanne, vor dem Übertragen (330) der Inhalte an die mobile elektronische Vorrichtung nach dem Detektieren (310), dass sich die mobile elektronische Vorrichtung nahe dem vorgegebenen Ort befindet.

13. Das Verfahren gemäß Anspruch 3, wobei ein Benutzer der mobilen elektronischen Vorrichtung die Werbeinhalte an eine zweite mobile elektronische Vorrichtung weiterleitet.

14. Ein Computerprogramm, aufweisend Anweisungen zum Implementieren eines der Verfahren gemäß den Ansprüchen 1 bis 13.

## Revendications

1. Un procédé pour émettre du contenu vers un ou plusieurs dispositifs électroniques mobiles dans un réseau de communication sans fil selon leurs un ou plusieurs emplacements respectifs, le procédé comprenant :
la détection (310) d'un dispositif électronique mobile près d'un emplacement prédéterminé par un point d'accès du réseau de communication sans fil, la zone prédéterminée comprenant une plage de couverture du point d'accès du réseau de communication sans fil, et la détection comprenant en outre l'identification d'une adresse MAC du dispositif électronique mobile par le point d'accès du réseau de communication sans fil ;
l'authentification (320) du dispositif électronique pour la réception du contenu, l'authentification du dispositif électronique mobile incluant la détermination de la conformité du logiciel ou d'un système d'exploitation du dispositif électronique mobile pour la réception du contenu ;
la comparaison de l'adresse MAC du dispositif électronique mobile à des adresses MAC mémorisées, et l'authentification du dispositif électronique mobile selon que l'adresse MAC du dispositif électronique mobile est ou non une adresse MAC mémorisée ; et
l'émission (330) du contenu vers le dispositif électronique mobile authentifié par un fournisseur de contenu via le point d'accès.

2. Le procédé de la revendication 1, dans lequel l'authentification (320) du dispositif électronique mobile comprend la détermination d'une ou plusieurs d'entre :
la conformité du logiciel ou d'un système d'exploitation du dispositif électronique mobile pour la réception du contenu, la conformité du logiciel ou du système d'exploitation étant fonction de l'aptitude du logiciel ou du système d'exploitation à afficher le contenu à un utilisateur du dispositif électronique mobile en utilisant un ou plusieurs d'entre : un message défilant, une image, un SMS ; et
la durée pendant laquelle le dispositif électronique mobile s'est trouvé dans les limites de la portée du réseau de communication sans fil.

3. Le procédé de la revendication 1, dans lequel le contenu comprend du contenu promotionnel.

4. Le procédé de la revendication 3, dans lequel le contenu promotionnel est un coupon électronique qui est affiché sur une partie d'afficheur du dispositif électronique mobile.

5. Le procédé de la revendication 4, dans lequel un utilisateur du dispositif électronique mobile fait suivre le coupon électronique à un second dispositif électronique mobile.

6. Le procédé de la revendication 4, comprenant en outre la réception du coupon électronique en provenance de l'utilisateur du dispositif électronique mobile et la mise à disposition d'une réduction pour l'utilisateur sur un achat là où se trouve le commerçant.

7. Le procédé de la revendication 6, dans lequel la réception du coupon électronique comprend un ou plusieurs d'entre : la visualisation de l'afficheur du dispositif électronique ; le scannage d'un code à barres inclus dans le coupon électronique ; la réception d'une communication par infrarouge depuis le dispositif électronique mobile ; la réception d'une version imprimée du coupon électronique ; et la réception d'une communication audio en provenance du dispositif électronique mobile.

8. Le procédé de la revendication 6, comprenant en outre l'enregistrement du fait que le coupon électronique en provenance du dispositif électronique mobile a été honoré.

9. Le procédé de la revendication 8, comprenant en outre l'empêchement que le coupon électronique en provenance du dispositif électronique mobile ne soit honoré une seconde fois.

10. Le procédé de la revendication 1, comprenant en outre la détection d'un second dispositif électronique mobile près de l'emplacement prédéterminé.

11. Le procédé de la revendication 10, comprenant en outre la non-authentification du second dispositif électronique mobile, et en réponse à la non-authentification du second dispositif électronique mobile la non-transmission du contenu vers le second dispositif électronique mobile.

12. Le procédé de la revendication 1, comprenant en outre l'attente pendant une période de temps spécifiée avant émission (330) du contenu vers le dispositif électronique mobile après détection (310) que le dispositif électronique mobile est près de l'emplacement prédéterminé.

13. Le procédé de la revendication 3, dans lequel un utilisateur du dispositif électronique mobile fait suivre le contenu promotionnel à un second dispositif électronique mobile.

14. Un programme informatique comprenant des instructions pour implémenter l'un quelconque des procédés des revendications 1 à 13.
